# DEMANDE DE BREVET EUROPEEN

(11) **EP 4 663 013 A1**
(43) Date de publication de la demande: **17.12.2025**
(21) Numéro de dépôt: 25181917.3
(22) Date de dépôt: 11.06.2025
(51) Int. Cl.: A01K 27/00, H01R 3/00

(54) **KIT ET MAILLON POUR LAISSE BICONDUCTRICE D ÉLECTRICITÉ ET LAISSE OBTENUE**

(30) Priorité: 13.06.2024 FR 2406289; 08.09.2024 FR 2409513
(71) Demandeur: Stona, Daniel, 1201 Geneve (CH)
(72) Inventeur: Stona, Daniel, 1201 Geneve (CH)
(74) Mandataire: Stona, Daniel

(57) **Abrégé**

L'invention concerne un kit pour maillon de laisse biconductrice d'électricité, comprenant :
- une entretoise (3;20) ayant quatre pattes (a1,a'1,b1,b'1;c1,'c'1,d1,d'1),
- une paire de premières pièces (1,1';21,21') comportant à une extrémité longitudinale un doigt (4,4';23,23'),
- une paire de deuxièmes pièces (2,2';22,22') comportant à l'une de leurs extrémités longitudinales un évidement (6,6';25,25') apte à recevoir, à la fois, une patte d'entretoise (a1,a'1;c1,c'1) et un doigt (4,4';23,23') d'une première pièce (1,1';21,21'),
- quatre tiges (7,7',8,8';30,30',31,31') aptes être introduites dans des trous (t1,t'1,t2,t2';t3,t'3,t4,t'4) des pattes (a1,a'1,b1,b'1;c1,'c'1,d1,d'1) de l'entretoise (3;20), dans des trous des doigts (4,4';23,23'), des premières pièces (1,1';21,21') et dans ceux (11,12,11',12';28,29,28',29') des parois (9,10,9',10';26,27,26',27') des évidements (6,6';25,25') des deuxièmes pièces (2,2',22,22'),
- l'entretoise (3 ;20) étant constituée d'un matériau électriquement isolant et les premières pièces (1,1';21,21') et les deuxièmes pièces (2,2',22,22') ainsi que les tiges (7,7',8,8';30,30',31,31') de matériaux électriquement conducteurs.

L'invention concerne aussi le maillon et la laisse obtenus.

## Description

L'invention concerne un kit pour laisse biconductrice d'électricité, c'est-à-dire à double conduction électrique, permettant la transmission d'un courant électrique d'une extrémité longitudinale de la laisse à l'autre. L'invention se rapporte également à un maillon ainsi qu'à la laisse biconductrice d'électricité obtenue à partir du kit.

### Arrière-plan de l'invention

Dans ma demande internationale publiée sous le numéro WO2024100508, l'alimentation des moyens de verrouillage/déverrouillage situés au niveau du collier ou du harnais de l'animal de compagnie se fait soit à l'aide d'un fil électrique, soit par ondes électromagnétiques.

Lorsqu'un fil électrique est utilisé, il peut être coupé par des individus malintentionnés ou des plaisantins.

Le recours à des ondes électromagnétiques implique l'existence d'un circuit électronique et d'une alimentation propre au niveau des moyens de verrou il lage/déverroui Ilage.

### Exposé sommaire de l'invention

Le but principal de l'invention est de remédier d'une manière simple aux inconvénients précités.

Selon l'invention, ce but est atteint en prévoyant que la laisse elle-même puisse conduire le courant nécessaire aux moyens de verrouillage/déverrouillage. Ainsi, il n'est pas nécessaire de prévoir un fil électrique accompagnant la laisse ou un circuit électronique au niveau du collier ou du harnais.

Pour cela, l'invention propose une laisse biconductrice d'électricité, c'est-à-dire à double conduction électrique, formée à partir d'un kit conforme à l'énonciation 1 suivante :
1.- Kit pour maillon de laisse biconductrice d'électricité, comprenant :
   - une entretoise de forme allongée suivant un axe longitudinal et ayant quatre pattes disposées en rectangle et comportant chacune un trou perpendiculaire à l'axe longitudinal,
   - une paire de premières pièces de forme allongée suivant un axe longitudinal et comportant à une extrémité longitudinale un doigt comportant un trou perpendiculaire à l'axe longitudinal,
   - une paire de deuxièmes pièces de forme allongée suivant un axe longitudinal et comportant à l'une de leurs extrémités longitudinales un évidement apte à recevoir, à la fois, une patte d'entretoise et un doigt d'une première pièce et ayant deux parois longitudinales percées chacune d'un trou perpendiculaire à l'axe longitudinal, les trous des deux parois étant alignés,
   - quatre tiges aptes être introduites dans les trous des pattes de l'entretoise, dans ceux des doigts des premières pièces et dans ceux des parois des évidements des deuxièmes pièces,
   - l'entretoise étant constituée d'un matériau électriquement isolant et les premières pièces et les deuxièmes pièces ainsi que les tiges de matériaux électriquement conducteurs.

Chaque kit selon l'invention est destiné à la réalisation d'un maillon. Les maillons sont quant à eux destinés à être raccordés les uns aux autres pour réaliser une laisse constituée en fait de deux demi-laisses longitudinales et symétriques par rapport à l'axe longitudinal de la laisse.

L'entretoise a pour rôle de maintenir les demi-laisses séparées l'une de l'autre pour éviter qu'elles entrent en contact l'une avec l'autre. Ainsi, le courant peut circuler dans un sens le long d'une demi-laisse et revenir dans l'autre sens dans l'autre demi-laisse. Par conséquent, il est possible d'alimenter en énergie électrique un appareil situé à une extrémité de la laisse au moyen d'une source d'énergie électrique située à l'autre extrémité de la laisse et ceci, sans avoir recours à des fils électriques qui pourraient facilement être sectionnés.

En effet, si la laisse peut subir, lorsqu'elle est utilisée, des chocs, ceux-ci ne sauraient provoquer une interruption de courant de longue durée. Une coupure de courant ne durerait dans la pratique que quelques microsecondes, ce qui ne perturberait pas l'utilisation prévue pour la laisse, à savoir, la conduction d'une courant de commande, généralement de déverrouillage, aux moyens de verrouillage/déverrouillage d'un collier ou harnais d'animal de compagnie.

Des caractéristiques avantageuses du kit de l'énonciation 1 précitée sont indiquées dans les énonciations 2 à 9 suivantes :
2.- Kit selon l'énonciation 1, dans lequel les deuxièmes pièces comportent à leur autre extrémité longitudinale un deuxième évidement identique à leur évidement et les premières pièces comportent à leur autre extrémité longitudinale un deuxième doigt identique au doigt.
3.- Kit selon l'énonciation 2, dans lequel les pattes comportent une partie perpendiculaire à l'axe prolongée par une partie parallèle à l'axe de l'entretoise, les pattes situées d'un côté longitudinal ayant une forme opposée longitudinalement à celle des pattes situées de l'autre côté longitudinal.
4.- Kit selon l'énonciation 1, dans lequel les premières pièces sont identiques aux deuxièmes pièces, toutes les pièces comportant un évidement à une extrémité longitudinale et un doigt à l'autre extrémité longitudinale.
5.- Kit selon l'énonciation 4, dans lequel les pattes comportent une partie perpendiculaire à l'axe de l'entretoise prolongée par une partie parallèle à cet axe, les pattes situées d'un côté longitudinal ayant la même forme que les pattes situées de l'autre côté longitudinal.
6.- Kit selon l'une des énonciations 1 à 5, dans lequel les tiges sont des goupilles formant un ajustement serré dans les trous des parois longitudinales des évidements et un ajustement avec jeu dans les trous de l'entretoise et des doigts.
7.- Kit selon l'une des énonciations 1 à 5, dans lequel les tiges sont des vis, au moins certains des trous des parois longitudinales étant taraudés pour coopérer avec les filetages des vis.
8.- Kit selon l'une des énonciations 1 à 7, dans lequel chaque évidement comporte une paroi longitudinale plus courte que l'autre.
9.- Kit selon l'une des énonciations 1 à 8, dans lequel l'entretoise et les premières et deuxièmes pièces se présentent sous forme de plaques.

L'invention a également pour objet un maillon obtenu à partir du kit précité, conforme à l'énonciation 10 suivante :
10.- Maillon comprenant un kit selon l'énonciation 3 ou selon l'une des énonciations 6 à 9 dépendantes de l'énonciation 3, dans lequel chaque doigt de première pièce est à l'intérieur d'un évidement de deuxième pièce, les axes des premières pièces étant alignés avec les axes des deuxièmes pièces, un couple première pièce /deuxième pièce étant disposé parallèlement à un autre couple première pièce/deuxième pièce, une entretoise étant disposée entre les deux premières pièces avec son axe parallèle aux axes des première et deuxièmes pièces et avec deux pattes situées d'un même côté longitudinal chacune à l'intérieur d'un évidement de deuxième pièce, entre une paroi de cet évidement et un doigt de première pièce, les trous des parois de cet évidement, du doigt et de la patte d'entretoise étant chacun traversé par une tige, les deux autre tiges étant disponibles pour une raccordement à un autre maillon.

Une variante de ce maillon s'énonce comme suit :
11.- Maillon comprenant un kit selon l'énonciation 5 ou selon l'une des énonciations 6 à 9 dépendante de l'énonciation 5, dans lequel chaque doigt de deuxième pièce est à l'intérieur d'un évidement de première pièce, les axes des premières et deuxièmes pièces étant alignés, un couple première pièce/deuxième pièce étant disposé parallèlement à un autre couple première pièce/deuxième pièce, une entretoise étant disposée entre les deux deuxièmes pièces avec son axe parallèle aux axes des premières et deuxièmes pièces et avec deux pattes situées d'un même côté longitudinal chacune à l'intérieur d'un évidement de première pièce, entre une paroi de cet évidement et un doigt de deuxième pièce, les trous des parois de cet évidement, du doigt et de la patte d'entretoise étant traversés par une tige, les deux autre tiges étant disponibles pour une raccordement à un autre maillon.

L'invention a aussi trait à une laisse biconductrice d'électricité obtenue à partir d'une pluralité de maillons selon l'invention, conforme à l'énonciation 12 suivante :
12.- Laisse biconductrice d'électricité, comportant une pluralité de maillons selon l'énonciation 10 ou 11, chaque maillon étant raccordé à un autre maillon :
- par les tiges traversant les trous des doigts de la première pièce du maillon, les trous des pattes de l'entretoise du maillon ainsi que les trous des parois d'un évidement de l'autre maillon (premier mode de réalisation), ou
- par les tiges traversant les trous des parois de l'évidement de la deuxième pièce et les pattes de l'entretoise du maillon ainsi que les doigts de l'autre maillon (deuxième mode de réalisation).

Des caractéristiques avantageuses de la laisse de l'énonciation 12 précitée sont indiquées dans l'énonciations 13 suivante :
13.- Laisse biconductrice d'électricité selon l'énonciation 12, comportant en outre un raccord permettant à la laisse de tourner par rapport à son axe longitudinal tout en étant raccordée à un boîtier de poignée de laisse et en transmettant de l'électricité dans deux sens.

Enfin, l'invention se rapporte aussi à une utilisation selon l'énonciation 14 suivante :
14.- Utilisation d'au moins un maillon selon l'énonciation 10 ou 11 ou d'une laisse selon l'énonciation 12 ou 13 pour alimenter en électricité un appareil électrique, par exemple un collier ou harnais d'animal de compagnie comprenant des moyens de verrouillage/déverrouillage électromagnétiques.

D'autres caractéristiques et avantages de l'invention vont maintenant être décrits en détail dans l'exposé suivant qui est donné en référence aux figures annexées, lesquelles représentent schématiquement :
[Fig. 1] : un kit selon l'invention en vue de face en coupe ;
[Fig. 2] : le kit de la figure 1, en vue de gauche et sans les tiges ;
[Fig. 3] : une variante selon l'invention du kit de la figure 1 ;
[Fig. 4] : la variante de la figure 3, en vue de gauche et sans les tiges ;
[Fig. 5] : une laisse selon l'invention obtenue à partir du kit des figures 1 et 2 ;
[Fig. 6] : une laisse selon l'invention obtenue à partir du kit des figures 3 et 4 ;
[Fig. 7] : un raccord pour une laisse selon l'invention en vue de face en coupe ; et
[Fig. 8] : le raccord de la figure 7, en vue de dessus ;
[Fig. 9] et [Fig. 10] : des lames élastiques électriquement conductrices, en perspective.

### Exposé détaillé de l'invention

### Kit selon un premier mode de réalisation

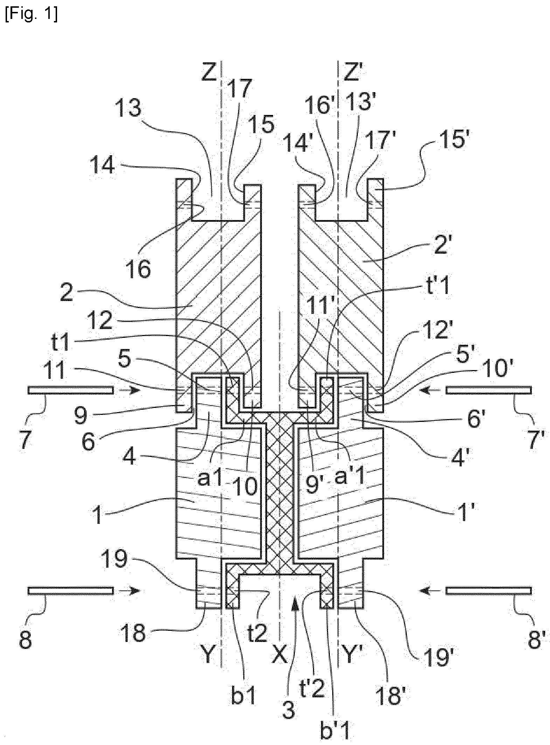

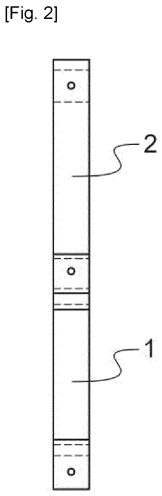

Sur les figures 1 et 2 est représenté un kit selon un premier mode de réalisation de l'invention.

Ce kit comporte tout d'abord une entretoise 3 de forme allongée suivant un axe longitudinal X et ayant quatre pattes a1,b1,a'1,b'1 disposées selon un rectangle et comportant chacune un trou perpendiculaire t1,t2,t'1,t'2 à l'axe longitudinal X. Les pattes a1,a'1,b1,b'1 comportent une partie perpendiculaire à l'axe X prolongée par une partie parallèle à l'axe X.

Les pattes a1,a'1 situées d'un côté longitudinal ont une forme opposée longitudinalement à celles b1,b'1 des pattes situées de l'autre côté longitudinal, ou, autrement dit, les pattes a1,a1' forment un U et les pattes b1,b'1 forment un U à l'envers.

L'entretoise 3 a pour fonction de maintenir écartées l'une de l'autre, d'une part, une première pièce 1 et une première pièce 1', et, d'autre part, une deuxième pièce 2 et une deuxième pièce 2'.

Cependant, comme on le verra par la suite, l'entretoise d'un autre kit participe aussi au maintien à l'état écarté du des deuxièmes pièces 2,2'.

Les premières pièces 1' et 1' sont en général identiques, de forme allongée suivant un axe longitudinal Y,Y' et elles comportent chacune à une extrémité longitudinale un doigt 4,4' comportant un trou 5,5' perpendiculaire à leur axe longitudinal respectif Y,Y'.

Comme on peut le voir sur la figure 1, les doigts 4 et 4' ne sont pas également réparties de part et d'autre de leur axe respectif Y,Y', ils sont décalés sur un côté par rapport cet axe Y,Y'.

Les deuxièmes pièces 2 et 2' sont en général identiques, de forme allongée suivant un axe longitudinal Z,Z' et elles comportent chacune à une extrémité longitudinale un évidement 6,6' apte à recevoir, à la fois, une patte d'entretoise a1,a'1 et un doigt 4,4' de première pièce 1,1'. Les deux parois longitudinales 9,10,9',10' de chaque évidement 6,6' se font face et sont percées chacune d'un trou 11,12,11',12' perpendiculaire à l'axe longitudinal Z,Z', les trous 11,12 et 11',12' des deux parois 9,10 et 9',10' étant alignés.

Le kit comprend également quatre tiges 7,7',8,8', aptes à être introduites respectivement dans les trous t1,t1',t2,t2' des pattes a1,a'1,b1,b'1 de l'entretoise 3, dans ceux 5,5' des doigts 4,4' des premières pièces 1,1' et dans ceux 11,12,11',12' des parois 9,10,9',10' des évidements 6,6' des deuxièmes pièces 2,2'.

La longueur de l'entretoise 3 suivant l'axe X est sensiblement égale à celle des premières pièces 1,1'

Les deuxièmes pièces 2,2' comportent à leur autre extrémité longitudinale un deuxième évidement 13,13' en général identique à l'évidement 6,6', avec des parois longitudinales 14,15,14,15' avec également des trous transversaux 16,17,16',17'.

Les premières pièces 1,1' comportent à leur autre extrémité longitudinale un deuxième doigt 18,18' en général identique au doigt 4,4'.

### Kit selon un deuxième mode de réalisation

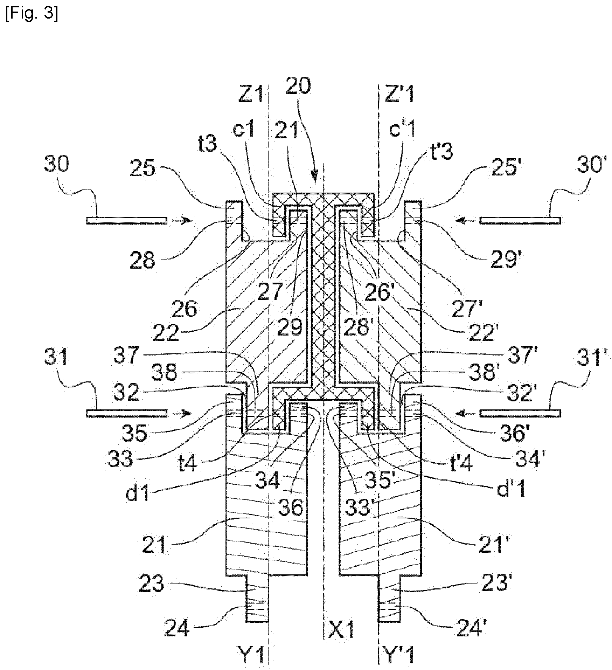

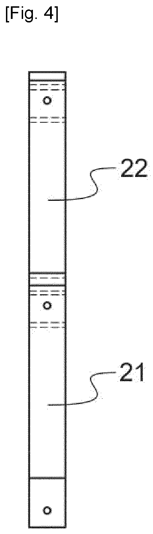

Sur les figures 3 et 4 est représenté un kit selon un deuxième mode de réalisation de l'invention.

Comme le kit du premier mode de réalisation, ce kit comporte tout d'abord une entretoise 20 de forme allongée suivant un axe longitudinal X1 et ayant quatre pattes c1,d1,c'1,d'1 disposées selon un rectangle et comportant chacune un trou perpendiculaire t3,t4,t'3,t'4 à l'axe longitudinal X1.

Cette entretoise 20 a pour fonction de maintenir écartées l'une de l'autre, d'une part, une première pièce 21 et une première pièce 21', et, d'autre part, une deuxième pièce 22 et une deuxième pièce 22'.

Cependant, comme on le verra par la suite, l'entretoise d'un autre kit participe aussi au maintien à l'état écarté des premières pièces 21,21'.

Les premières pièces 21 et 21' sont en général identiques, de forme allongée suivant un axe longitudinal Y1,Y1' et elles comportent chacune à une extrémité longitudinale un doigt 23,23' comportant un trou 24,24' perpendiculaire à leur axe longitudinal respectif Y1,Y1'.

Comme on peut le voir sur la figure 3, les doigts 23 et 23' ne sont pas également répartis de part et d'autre de leur axe respectif Y1,Y1', ils sont décalés sur un côté par rapport cet axe Y1,Y1'.

Les deuxièmes pièces 22 et 22' sont en général identiques, de forme allongée suivant un axe longitudinal Z1,Z1' et elles comportent chacune à une extrémité longitudinale un évidement 25,25' apte à recevoir, à la fois, une patte d'entretoise c1,c1' et, comme on le verra par la suite, un doigt de première pièce d'un autre kit selon ce deuxième mode de réalisation.

Les deux parois longitudinales 26,27,26',27' de chaque évidement 25,25' se font face et sont percées chacune d'un trou 28,29,28',29' perpendiculaire à l'axe longitudinal Z1,Z1', les trous 28,29 et 28',29' des deux parois 26,27 et 26',27' étant alignés.

Le kit comprend également quatre tiges 30,30',31,31', aptes à être introduites respectivement dans les trous t3,t'3,t4,t4' des pattes c1,c'1,d1,d'1 de l'entretoise 20, dans les trous 35,36,35',36' des parois 33,34,33',34' des évidements 32,32' des premières pièces, dans les trous 28,29,28',29' des parois 26,27',26',27' des évidements 25,25' des deuxièmes pièces 22,22' et dans ceux 24,24' des doigts 23,23' des premières pièces 21,21'.

Selon ce mode de réalisation, la longueur de l'entretoise 20 est sensiblement égale à celle des deuxièmes pièces 22,22'.

Selon ce mode de réalisation, les premières pièces sont en général identiques aux deuxièmes pièces.

Ceci signifie que les premières pièces 21,21' comportent elles-aussi à l'extrémité opposée à celle qui comporte les doigts 23,23', des évidements 32,32' en général identiques à ceux 25,25' des deuxièmes pièces 22,22', c'est-à-dire comportant deux parois 33,34,33',34' traversées perpendiculairement aux axes respectifs Y1 et Y'1 par des trous 35,36,35',36'.

Quant aux deuxièmes pièces 22,22', elles comportent des doigts 37,37' décalés par rapport à leur axe respectif Y1,Y'1 et traversés par des trous 38, 38' perpendiculaires à ces axes.

Les pattes c1,c'1 de l'entretoise 30 situées d'un côté longitudinal ont la même forme que les pattes d1,d1' situées de l'autre côté longitudinal, ou, autrement dit, les pattes c1,c'1 forment des U tournés dans le même sens longitudinal.

### Maillon selon un premier mode de réalisation

Ce maillon peut être obtenu en assemblant les pièces du kit selon le premier mode de réalisation de l'invention.

Précisément, deux premières pièces 1,1' sont disposées avec leurs axes Y et Y' parallèles, en étant tournées de manière à ce que les doigts 4,4' se trouvent sur des côtés opposés l'un à l'autre, c'est-à-dire que chaque doigt 4,4' est décalé par rapport à l'axe longitudinal Y, Y' dans la position qui l'éloigne le plus de l'autre doigt 4,4'.

Une entretoise 3 est ensuite placée entre les premières pièces 1,1' avec son axe X parallèle aux axes Y et Y'. Puis deux deuxièmes pièces dont disposées en alignant l'axe Z sur l'axe Y et l'axe Z' sur Y'.

Chaque doigt 4,4' de première pièce 1,1' est introduit dans un évidement 6,6' de deuxième pièce 2,2' en laissant du côté de l'axe X de la place pour que la partie parallèle à l'axe X d'une patte d'entretoise a1,a'1 puisse se mettre également dans l'évidement 6,6'.

Chaque tige 7,7' est ensuite introduite dans le trou 11,12' de la paroi d'évidement 9,10' de deuxième pièce 2,2' la plus éloignée de l'axe Z,Z', puis dans le trou 5,5' du doigt 4,4' de la première pièce 1,1', dans le trou t1,t'1 de la patte d'entretoise a1, a'1 et enfin dans le trou 12,11' de la paroi d'évidement 10,9' la plus proche de l'axe X.

De cette manière, l'entretoise 3 est partiellement solidarisée en rotation aux premières pièces 1,1'. Celles-ci peuvent tourner avec l'entretoise autour de l'axe des tiges 7,7'. L'entretoise 3 sera totalement solidarisée en mouvement lorsqu'un deuxième maillon sera raccordé.

### Maillon selon un deuxième mode de réalisation

Ce maillon peut être obtenu en assemblant les pièces du kit selon le deuxième mode de réalisation de l'invention.

Précisément, deux deuxièmes pièces 22,22' sont disposées avec leurs axes Z1 et Z'1 parallèles, en étant tournées de manière à ce que les doigts 37,37' se trouvent sur des côtés opposés l'un à l'autre, c'est-à-dire que chaque doigt 37,37' est décalé par rapport à l'axe longitudinal Y, Y' dans la position qui l'éloigne le plus de l'autre doigt 37,37'.

Une entretoise 20 est ensuite placée entre eux avec son axe X1 parallèle aux axes Z1 et Z1', les parties des pattes c1,c'1 qui sont parallèles à l'axe X1 étant introduites dans les évidements 25,25'. Puis deux premières pièces 21,21' sont disposées en alignant l'axe Y1 sur l'axe Z1 et l'axe Y'1 sur l'axe Z1'.

Chaque doigt 37,37' de deuxième pièce 22,22' est introduit dans un évidement 32,32' de première pièce 21,21' en laissant du côté de l'axe X1 de la place pour qu'une patte d'entretoise d1,d'1 puisse se mettre également dans l'évidement 32,32'.

Chaque tige 31,31' est ensuite introduite dans le trou 35,36' de la paroi d'évidement 33,34' de première pièce 21,21' la plus éloignée de l'axe Y1,Y1', puis dans le trou 38,38' du doigt 37,37' de la deuxième pièce 22,22', dans le trou t4,t'4 de la patte d'entretoise d1, d'1 et enfin dans le trou 36,35' de la paroi d'évidement 34,33' la plus proche de l'axe X1.

De cette manière, l'entretoise 20 est solidarisée en mouvement aux deuxièmes pièces 22,22'. Celles-ci peuvent tourner avec l'entretoise autour de l'axe des tiges 31,31'.

L'entretoise 20 sera totalement solidarisée en mouvement lorsqu'un deuxième maillon sera raccordé.

### Laisse selon l'invention

L'assemblage d'une pluralité de maillons de n'importe quel mode de réalisation aboutit à l'obtention d'une laisse selon l'invention.

Chaque maillon est donc raccordé à une extrémité longitudinale à un autre maillon par les tiges pénétrant à chaque fois dans les parois d'évidement, les doigts et les pattes d'entretoise.

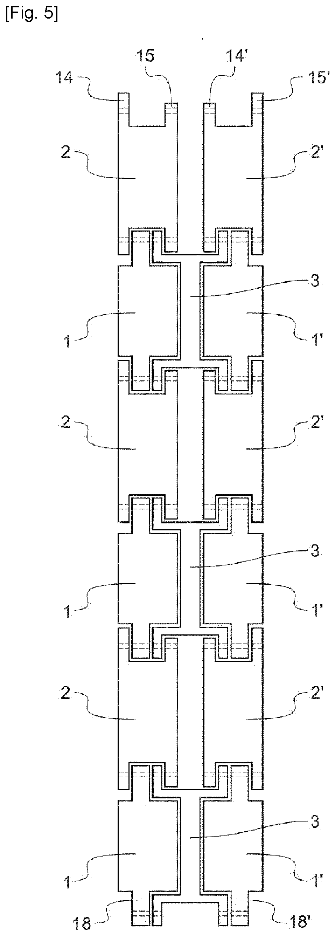

Avec le premier mode de réalisation, on obtient la laisse représentée sur la figure 5.

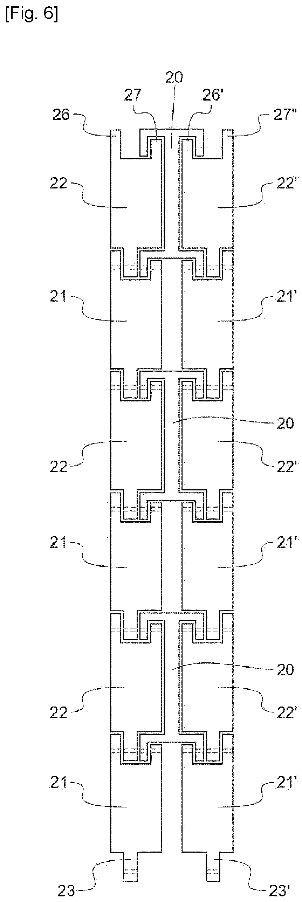

Avec le deuxième mode de réalisation, on obtient la laisse représentée sur la figure 6.

Il va de soi qu'il n'est pas possible de combiner le premier mode de réalisation avec le deuxième mode de réalisation.

Deux types de laisses sont donc obtenus, mais ces laisses présentent peu de différences entre elles.

Bien que les longueurs axiales des premières pièces et des deuxièmes pièces soit en général identiques, on peut les concevoir différentes.

Dans un même type de laisse, on peut aussi avoir des maillons de longueurs axiales différentes. Il va sans dire que l'entretoise doit avoir une longueur axiale en correspondance avec la première pièce (premier mode de réalisation) ou deuxième pièce (deuxième mode de réalisation) à côté de laquelle elle se trouve. En outre, les longueurs axiales des premières pièces 1,21 doivent être égales aux longueurs axiales 1',21' et celles des deuxièmes pièces 2,22 à celles des deuxièmes pièces 2',22'.

### Remarques concernant tous les modes de réalisation

La troisième paroi des évidements, la paroi du fond, est de préférence perpendiculaire aux axes Z,Z',Z1,Z'1,Y1,Y'1.

Le jeu entre le bout d'une première ou deuxième pièce et la troisième paroi d'un évidement doit être suffisant pour permettre une libre rotation de la première ou deuxième pièce. Les angles des bouts des premières ou deuxièmes pièces sont de préférence arrondis également pour faciliter une telle libre rotation.

Comme peut le voir en comparant les figures 2 et 4 aux figures 1 et 2, les premières pièces, les deuxièmes pièces et les entretoises sont minces et ont sensiblement la forme d'une plaque.

Les tiges sont par exemple des goupilles formant un ajustement serré dans les trous des parois longitudinales des évidements et un ajustement avec jeu dans les trous des pattes de l'entretoise et ceux des doigts. Elles sont donc généralement introduites à l'aide d'un marteau et retirées à l'aide d'un chasse-goupille. La partie de la goupille destinée à se trouver dans un évidement est de préférence lisse.

Les tiges peuvent aussi être des vis. Dans ce cas, elles devront comporter une section de préférence lisse destinée à être à l'intérieur d'un évidement et une extrémité filetée prévue pour coopérer avec un trou de paroi d'évidement taraudé.

Dans le deuxième mode de réalisation, des vis sont préférées pour faciliter le montage ou démontage d'un maillon.

Les dimensions des évidements, des premières pièces, des deuxièmes pièces et des entretoises doivent permettre une libre rotation d'une première pièce par rapport à une deuxième pièce.

En outre, le dimensionnement des tiges, des parois d'évidement, des premières et des deuxièmes pièces doit conférer une résistance à la traction élevée suivant les axes longitudinaux Y,Y',Y1,Y'1 et Z,Z',Z1,Z'1.

Au niveau de chaque évidement, l'une des parois longitudinales est plus courte que l'autre afin de laisser passer la partie d'une patte perpendiculaire à l'axe X, X1 de l'entretoise concernée et de permettre la rotation libre de l'entretoise accompagnée d'une première pièce (1^{er} mode de réalisation) ou d'une deuxième pièce (2^{ème} mode de réalisation), par rapport à une deuxième pièce (1^{er} mode de réalisation) ou une première pièce (2^{ème} mode de réalisation). La paroi la plus courte est évidemment celle située du côté de l'entretoise lorsque le maillon est assemblé, comme cela ressort des figures 1 à 6.

Les arêtes transversales (perpendiculaires aux axes longitudinaux) des pattes des entretoises et des premières et deuxièmes pièces sont de préférence arrondies ou biseautées afin de ne pas gêner la rotation précitée.
L'entretoise est constituée d'un matériau électriquement isolant et rigide (matériau plastique dur, bois...)

Les premières et deuxièmes pièces ainsi que les tiges sont constituées de matériaux électriquement conducteurs, par exemple des métaux ou alliages de métaux (acier inoxydable...).

Les premières et deuxièmes pièces peuvent être partiellement recouvertes d'une couche isolante, de la peinture non électriquement conductrice par exemple.

Bien entendu, il faut bien veiller à ce que les parois des trous des premières et deuxièmes pièces ainsi que les tiges ne soient pas recouvertes de couche isolante.

La circulation du courant se fait de maillon à maillon dans un sens sur une demi-laisse et dans l'autre sens sur l'autre demi-laisse.

Dans une laisse, les axes longitudinaux X ou X1 de toutes les entretoises sont alignés.

De même, les axes longitudinaux Y des premières pièces sont tous alignés, les axes longitudinaux Y' des premières pièces sont tous alignés, les axes longitudinaux Y1 des premières pièces sont tous alignés, les axes longitudinaux Y'1 des premières pièces sont tous alignés, les axes longitudinaux Z des deuxièmes pièces sont alignés, les axes longitudinaux Z' des deuxièmes pièces sont alignés, les axes longitudinaux Z1 des deuxièmes pièces sont alignés, les axes longitudinaux Z'1 des deuxièmes pièces sont alignés.

Les axes Y,Y',Y1,Y'1 et Z,Z',Z1 ,Z'1 et X,X1 sont normalement tous parallèles. La laisse présente donc une symétrie longitudinale par rapport à l'axe X ou X1 des entretoises.

Le premier maillon de la laisse 1,2 ;1',2' est connecté à une source d'énergie électrique et le dernier maillon à l'appareil nécessitant de l'énergie électrique, par exemple, les moyens de verrouillage/déverrouillage. Les connexions se font normalement au moyen des doigts et des parois des évidements, en se servant avantageusement de leurs trous transversaux.

### Raccordement d'une laisse

La laisse selon l'invention peut être raccordée par l'une de ses extrémités longitudinales à une poignée de laisse telle que celle de la demande internationale précitée n° WO2024100508 et/ou par l'autre extrémité à des moyens de verrouillage d'un collier ou d'un harnais d'animal de compagnie tels que ceux de cette même demande internationale.

La rupture d'une entretoise n'est pas grave car les autres entretoises permettent encore aux deux demi-maillons d'être encore suffisamment éloignés l'un de l'autre pour ne pas se toucher et provoquer un court-circuit.

Cependant, pour diminuer la torsion d'une laisse selon l'invention et donc réduire les risques de rupture d'une entretoise, le raccordement de la laisse se fait de préférence en permettant une rotation de la laisse autour de son axe longitudinal par rapport à la poignée et/ou une rotation de la laisse par rapport au collier ou harnais de l'animal de compagnie.

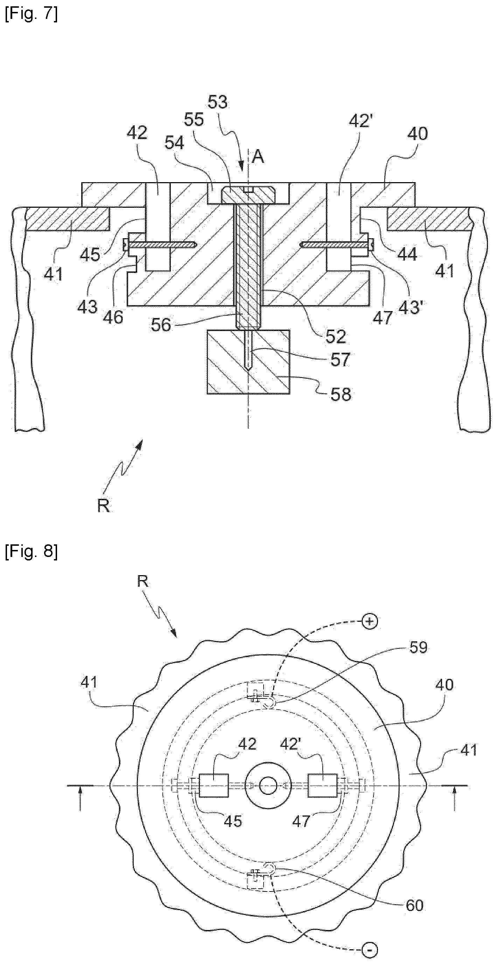

Ceci peut être obtenu au moyen d'un raccord R tel que celui représenté sur les figures 7 et 8.

Ce raccord R est constitué d'un matériau électriquement isolant et il présente une forme sensiblement cylindrique s'allongeant suivant un axe A.

Il comprend à une extrémité longitudinale une partie en forme de disque 40 destinée à venir en appui contre le boîtier 41 d'une poignée.

Deux creusures 42,42' ont été réalisées symétriquement de part et d'autre de l'axe A pour recevoir chacune, s'il s'agit d'une laisse selon le premier mode de réalisation de l'invention, un doigt 18,18' de première pièce 1,1' ainsi que la partie parallèle à l'axe X d'une patte b1,b'1 d'entretoise 3 ou, s'il s'agit d'une laisse selon le deuxième de mode de réalisation de l'invention, uniquement le doigt 23,23' d'une première pièce 21,21'.

Dans le premier cas, la dimension radiale des creusures 42,42' est logiquement plus importante.

Les doigts 18,18',23,23' et le cas échéant, les pattes d'entretoise b1,b'1, peuvent être fixés au raccord au moyen de vis 43,43' traversant leurs trous 19,19',24,24' et le cas échéant des trous t2,t'2.

Le raccord R comporte une première gorge 44 située à proximité de la partie discoïde 40 et cette première gorge 40 présente un premier trou radial 45, permettant de mettre à nu le doigt 18,23 d'une première pièce 1,21.

De même, une deuxième gorge 46 est prévue à distance axiale de la première gorge 44 et elle présente un deuxième trou radial 47, permettant de mettre à nu le doigt 18', 23' de l'autre première pièce 1',21' symétrique de la première pièce 1,21 logée dans le trou 42 et maintenue par la vis 43.

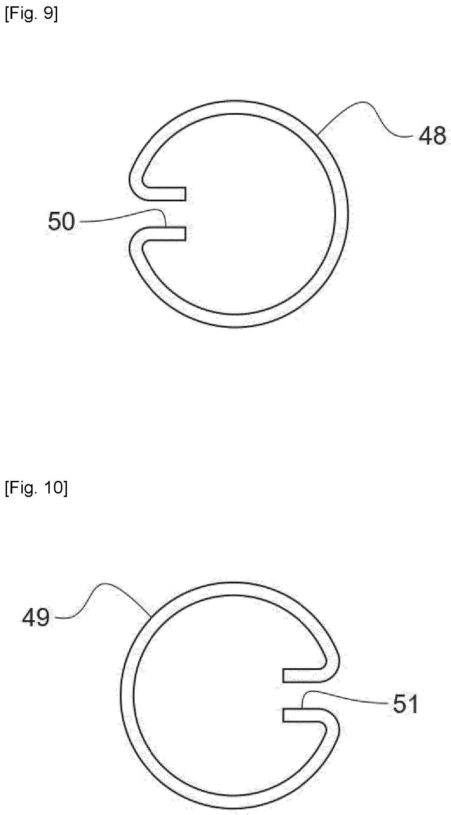

Des lames élastiques 48,49 conductrices électriquement visibles sur les figures 9 et 10, généralement en métal, de forme circulaire et ayant chacune au moins une extrémité 50,51 repliée vers le centre, sont prévues pour être déformées le temps de les placer dans les gorges 44,46 en introduisant dans les trous radiaux 45,47 leurs extrémités repliées 50,51 afin que celles-ci établissent un contact électrique avec les doigts 18,23,18',23' des premières pièces 1,21,1',21'.

En revenant aux figures 7 et 8, on voit qu'au centre de la partie discoïde 40 du raccord R est prévu un trou axial 52 prévu pour loger une vis 53. Une noyure 54 peut également être prévue au centre de la partie discoïde 40 pour recevoir la tête 55 de la vis 53.

La vis 53 comporte une section cylindrique lisse 56 prévue pour traverser le raccord R et permettre à celui-ci de tourner librement autour d'elle.

A l'extrémité de la vis 53 opposée à sa tête 55, est prévue une section filetée 57 destinée à se fixer dans un plot de fixation 58 du boîtier 41 pour maintenir le raccord R sur le boîtier 41.

Des contacts d'alimentation électrique sont prévus, notamment sous la forme de lamelles élastiques 59,60 électriquement conductrices, visibles sur les figures 9 et 10 et incurvées pour être appliquées contre les lames 48,49 afin de pouvoir leur transmettre du courant électrique provenant des bornes + et - de la poignée de laisse et devant parcourir la laisse, et ce, même en cas de rotation de la laisse par rapport au boîtier 41.

Il est possible de prévoir un raccord R au niveau du boîtier d'une poignée de laisse et/ou un autre au niveau d'un collier ou harnais d'animal de compagnie. Dans ce dernier cas, les lames 48,49 sont connectées aux moyens de verrouillage/déverrouillage de ce collier ou harnais.

Ainsi, lors de l'utilisation de la laisse, une grande flexibilité est obtenue grâce aux maillons constitutifs de la laisse et de la liberté de rotation de celle-ci par rapport à la poignée de laisse et/ou au collier ou harnais d'un animal de compagnie.

## Revendications

1. Kit pour maillon de laisse biconductrice d'électricité, comprenant :
- une entretoise (3;20) de forme allongée suivant un axe longitudinal (X;X1) et ayant quatre pattes (a1,a'1,b1,b'1;c1,'c'1,d1,d'1) disposées en rectangle et comportant chacune un trou (t1,t'1,t2,t2';t3,t'3,t4,t'4) perpendiculaire à l'axe longitudinal (X;X1),
- une paire de premières pièces (1,1';21,21') de forme allongée suivant un axe longitudinal (Y,Y';Y1,Y'1) et comportant à une extrémité longitudinale un doigt (4,4';23,23') comportant un trou (5,5';24,24') perpendiculaire à l'axe longitudinal (Y,Y';Y1,Y'1),
- une paire de deuxièmes pièces (2,2';22,22') de forme allongée suivant un axe longitudinal (Z,Z';Z1,Z'1) et comportant à l'une de leurs extrémités longitudinales un évidement (6,6';25,25') apte à recevoir, à la fois, une patte d'entretoise (a1,a'1;c1,c'1) et un doigt (4,4';23,23') d'une première pièce (1,1';21,21') et ayant deux parois longitudinales (9,10,9',10';26,27,26',27') percées chacune d'un trou (11,12,11',12';28,29,28',29') perpendiculaire à l'axe longitudinal (Z,Z';Z1,Z'1), les trous (11,12,11',12';28,29,28',29') des deux parois (9,10,9',10';26,27,26',27') étant alignés,
- quatre tiges (7,7',8,8';30,30',31,31') aptes être introduites dans les trous (t1,t'1,t2,t2';t3,t'3,t4,t'4) des pattes (a1,a'1,b1,b'1;c1,'c'1,d1,d'1) de l'entretoise (3;20), dans ceux des doigts (4,4';23,23') des premières pièces (1,1';21,21') et dans ceux (11,12,11',12';28,29,28',29') des parois (9,10,9',10';26,27,26',27') des évidements (6,6';25,25') des deuxièmes pièces (2,2',22,22'),
- l'entretoise (3 ;20) étant constituée d'un matériau électriquement isolant et les premières pièces (1,1';21,21') et les deuxièmes pièces (2,2',22,22') ainsi que les tiges (7,7',8,8';30,30',31,31') de matériaux électriquement conducteurs.

2. Kit selon la revendication 1, dans lequel les deuxièmes pièces (2,2') comportent à leur autre extrémité longitudinale un deuxième évidement (13,13') identique à leur évidement (6,6') et les premières pièces (1,1') comportent à leur autre extrémité longitudinale un deuxième doigt (18,18') identique au doigt (4,4').

3. Kit selon la revendication 2, dans lequel les pattes (a1,a'1,b1,b'1) comportent une partie perpendiculaire à l'axe (X) prolongée par une partie parallèle à l'axe (X), les pattes (a1,a'1) situées d'un côté longitudinal ayant une forme opposée longitudinalement à celle des pattes (b1,b'1) situées de l'autre côté longitudinal.

4. Kit selon la revendication 1, dans lequel les premières pièces (21,21') sont identiques aux deuxièmes pièces (22,22'), toutes les pièces (21,21';22 ;22') comportant un évidement (25,25', 32,32') à une extrémité longitudinale et un doigt (23,23',37,37') à l'autre extrémité longitudinale.

5. Kit selon la revendication 4, dans lequel les pattes (c1,c'1,d1,d'1) comportent une partie perpendiculaire à l'axe (X1) prolongée par une partie parallèle à l'axe (X1), les pattes (c1,c'1) situées d'un côté longitudinal ayant la même forme que les pattes (d1,d'1) situées de l'autre côté longitudinal.

6. Kit selon l'une des revendications 1 à 5, dans lequel les tiges (7,7',8,8' ; 30,30';31,31') sont des goupilles formant un ajustement serré dans les trous (11,12,11',12',16,17,16',17';28,29,28',29',35,36,35',36') des parois longitudinales (9,10,9',10',14,15;14',15'; 26,27,26',27',33,34,33',34') des évidements (6,6';13,13' ;25,25';32,32') et un ajustement avec jeu dans les trous (t1,t'1,t'2,t'2;t3,t'3,t4,t'4) de l'entretoise (3,20) et des doigts (4,4',18,18';23,23',37,37').

7. Kit selon l'un des revendications 1 à 5, dans lequel les tiges (7,7',8,8') sont des vis, au moins certains des trous (11,12,11',12',16,17,16',17';28,29,28',29',35,36,35',36') des parois longitudinales étant taraudés pour coopérer avec les filetages des vis.

8. Kit selon l'une des revendications 1 à 7, dans lequel chaque évidement (6,6';13,13' ;25,25';32,32') comporte une paroi longitudinale plus courte que l'autre.

9. Kit selon l'une des revendications 1 à 8, dans lequel l'entretoise (3 ;20) et les premières (1,1';21,21') et deuxièmes (2,2';22,22') pièces se présentent sous forme de plaques.

10. Maillon comprenant un kit selon la revendication 3 ou selon l'une des revendications 6 à 9 dépendantes de la revendication 3, dans lequel chaque doigt (4,4') de première pièce (1,1') est à l'intérieur d'un évidement (13,13') de deuxième pièce (2,2'), les axes (Y,Z;Y'Z') étant alignés, un couple première pièce (1)/deuxième pièce (2) étant disposé parallèlement à un autre couple première pièce (1')/deuxième pièce (2'), une entretoise (3) étant disposée entre les deux premières pièces (1,1') avec son axe (X) parallèle aux axes (Y,Z;Y',Z') et avec deux pattes (a 1,a'1) situées d'un même côté longitudinal chacune à l'intérieur d'un évidement (6,6') de deuxième pièce (2,2'), entre une paroi (10,9') de cet évidement (6,6') et un doigt (4,4') de première pièce (1,1'), les trous (11,12,11'12') des parois de l'évidement (6,6'), du doigt (4,4') et de la patte d'entretoise (a1,a'1) étant chacun traversé par une tige (7,7',) les deux autre tiges (8,8') étant disponibles pour une raccordement à un autre maillon.

11. Maillon comprenant un kit selon la revendication 5 ou selon l'une des revendications 6 à 9 dépendantes de la revendication 5, dans lequel chaque doigt (37,37') de deuxième pièce (22,22') est à l'intérieur d'un évidement (32,32') de première pièce (21,21'), les axes (Y1,Z1;Y'1,Z'1) étant alignés, un couple première pièce (21)/deuxième pièce (22) étant disposé parallèlement à un autre couple première pièce (21')/deuxième pièce (22'), une entretoise (20) étant disposée entre les deux deuxièmes pièces (22,22') avec son axe (X1) parallèle aux axes (Y1,Z1;Y'1,Z'1) et avec deux pattes (d1,d'1) situées d'un même côté longitudinal chacune à l'intérieur d'un évidement (32,32') de première pièce (21,21'), entre une paroi (34,33') d'évidement (32,32') et un doigt (37,37') de deuxième pièce (22,22'), les trous (35,36,35',36') des parois (33,34,33',34) de l'évidement (32,32'), du doigt (37,37') et de la patte d'entretoise (d1,d1) étant traversés par une tige (31,31'), les deux autre tiges (30,30') étant disponibles pour une raccordement à un autre maillon.

12. Laisse biconductrice d'électricité, comportant une pluralité de maillons selon la revendication 10 ou 11, chaque maillon étant raccordé à un autre maillon :
- par les tiges (8,8') traversant les trous (19,19') des doigts (18,18') de la première pièce (1,1'), les trous des pattes (b1,b'1) de l'entretoise (3) du maillon ainsi que les trous (16,17,16',17') des parois (14,15,14',15') d'un évidement (13,13') de l'autre maillon, ou
- par les tiges (30,30') traversant les parois (26,27,26',27'), de l'évidement (25,25') de la deuxième pièce (22,22') du maillon et les pattes (c1,c'1) de l'entretoise (20) du maillon ainsi que les doigts (23,23') de l'autre maillon.

13. Laisse biconductrice d'électricité selon la revendication 12, comportant en outre un raccord (R) permettant à la laisse de tourner par rapport à son axe longitudinal (X,X1) tout en étant raccordée à un boîtier (41) de poignée de laisse et en transmettant de l'électricité dans deux sens.

14. Utilisation d'au moins un maillon selon la revendication 10 ou 11 ou d'une laisse selon la revendication 12 ou 13 pour alimenter en électricité un appareil électrique.
